# EUROPEAN PATENT APPLICATION

(11) **EP 2 270 742 A1**
(43) Date of publication of application: **05.01.2011**
(21) Application number: 09290519.9
(22) Date of filing: 30.06.2009
(51) Int. Cl.: G06Q 30/00, H04N 7/173

(54) **Advertising content tracking**

(71) Applicant: Alcatel Lucent, 75008 Paris (FR)
(72) Inventor: Robinson, David Cecil, Aldbourne, Wiltshire SN8 2NP (GB); Kisel, Andrey, Maidenhead, Berkshire SL6 8DH (GB); Clougherty, Mark, Chatham, NJ 07928 (US)
(74) Representative: Kensett, John Hinton

(57) **Abstract**

A method of tracking advertisement provided over a network, comprising obtaining a fingerprint of an advertisement to be distributed over the network; determining a fingerprint of advertising content received by a user, and comparing the fingerprints to determine viewing of a particular advertisement by a particular user.

## Description

### Field of the Invention

This invention relates to content tracking. In particular, but not exclusively, it relates to tracking of advertising content for advertisements received with TV or on a video content delivered over a network.

### Background

Current Internet Protocol TV (IPTV) or other network distributed TV systems, such as Internet TV, are based upon subscription or pay per view models. IPTV is generally a closed IP network for TV delivery and Internet TV is an open network for TV delivery.

The user either pays a monthly subscription fee or an on demand rental costs to view content and broadcast TV channels. However, another model, and one that may be used as an alternative or in addition to the above ones, is that of advertising sponsored transmission, and advertisements are priced according to the actual number of users viewing the advertisement.

With such systems, it is desirable to be able to track information about user consumption of advertisements on broadcast TV channels or other video content, including those advertisements (known as linear advertisements) which are inserted into the broadcast stream at a local, regional or national level and targeted advertisements which are inserted into the video stream of specific users. This information can be used for many purposes including subscriber billing and monitoring and to help advertisement providers to refine their products.

It is currently possible to collect viewing data at a user's set top box (STB) and to periodically report this to a network entity, which performs correlation of viewer data with advertising events to provide advertisement tracking. However, this solution has the disadvantage that it is not suitable to work with targeted advertisement insertion inserted into a broadcast stream for which metadata, such as advertising identification and description, is not available. Also, it requires modification or specially adapted equipment to be provided at user's and requires multiple interfaces.

Another disadvantage if that this method cannot detect variations in the time an advertisement starts, which can happen for example when these are inserted in pauses in live sports events. Thus, viewing of an advertisement can be wrongly reported.

### Summary

The present invention arose in an attempt to provide an improved advertisement tracking, method and apparatus.

According to the present invention, there is provided a method of tracking advertisement provided over a network, comprising obtaining a fingerprint of an advertisement to be distributed over the network; obtaining a fingerprint of advertising content received by a user, and comparing the fingerprints to determine viewing of a particular advertisement by a particular user.

Note that the term 'user' is intended to mean a single user or a group of users showing a common identity or equipment (eg a common set-top box), or a common active 'profile' such as 'family' or 'parents'. It may be an authenticated user such as one who has a subscription record, or a unauthenticated user such as a user established simply by use of a set-top box or other equipment. Where there are groups of users, there may be a single user identity or a group sub-user identities which can be associated together if necessary.

The fingerprint of the content viewed by the user may be determined at an access or other network, or alternatively data sufficient to compute the fingerprint is obtained in the network, which data is passed to a means such as a profile server, or other fingerprint determiner, for fingerprint computing.

Fingerprint data relating to a plurality of advertisements may be stored in a database.

A stream of content may be provided with markers indicating where advertisements occur within the stream so that fingerprinting occurs only when indicated by the markers.

The invention further provides apparatus for tracking advertisements provided over a network, comprising a fingerprinting means for fingerprinting one or more advertisements to be distributed over the network; means for determining, at an access network that a stream of content is delivered to a user; means for fingerprinting advertising content within that stream and means for comparing the fingerprints to determine viewing of a particular advertisement by a particular user.

In a further aspect, the invention provides a database comprising a plurality of fingerprints, each fingerprint being representative of a specific advertisement to be transmitted over a network.

In embodiments therefore knowledge about specific advertisement timing and advertising metadata is not required in order to determine details of advertisement viewing by a user. This overcomes the limitation of client-side solutions when the time of advertisement start is varied. In particular, since a content provider does not need to specifically indicate precise timing or the sequence of the transmission of advertising content great flexibility can be obtained and targeted insertion easily be used, as can the insertion of advertisements varied or made at will in response to events.

### Description of the Drawings

Embodiments of the invention will now be described, by way of example only, with reference to the accompanying schematic drawings, in which:
Figure 1 shows part of a network; and
Figure 2 shows a content stream.

### Detailed Description

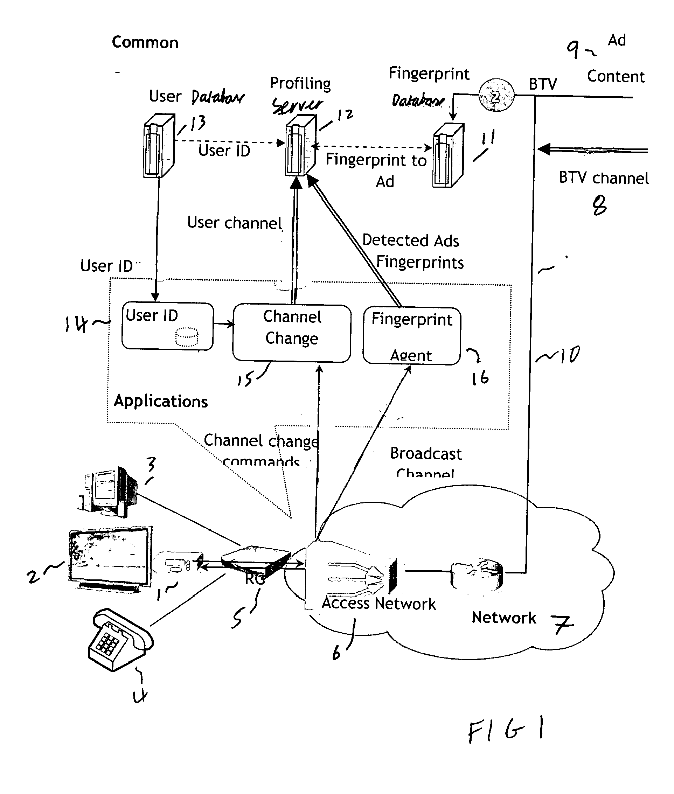

Referring to Figure 1, there is shown a network, for example an Internet network or IPTV network, via which, amongst other functionality, end users receive TV content. At an end user's premises, there is provided a set-top box 1 and a TV display 2 (or a TV with set-top box capability built in). The user will also generally have a computer 3 and telephone 4. These are all connected via a router, cable modem or other means 5 to an access network 6 forming part of a general network 7 such as Internet.

A broadcast TV content provider (not shown) provides content in known manner over a BTV channel 8 and advertising content 9 is also supplied from an appropriate source and inserted into the TV content along with the BTV channel content into a broadcast stream 10 delivered via the access network 6, to the user.

The apparatus shown in Figure 1 also includes a fingerprint database 11, a profiling server 12 and user database 13. Several applications are provided at the access network and these may of course be provided as software applications, firmware, hardware or any combination of these or other ways of deriving applications. These comprise a user ID database 40, a channel change tracking agent 50 and a fingerprint agent 16.

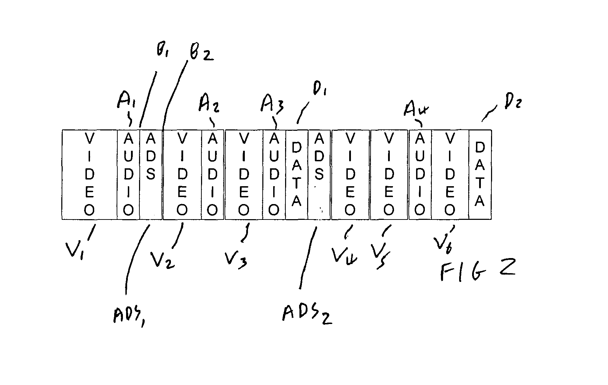

In embodiments, the BTV content provider 8 and/or advertising content provider 9 computes a fingerprint for each advertisement. Methods for doing this are well-known and are briefly referred to further below. The advertisement is then inserted into a content stream. Figure 2 shows a schematic multimedia content stream illustrating video content V₁ to V₆, audio content A1 to A4, data content D1 and D2 and inserted advertisement ADS1 and ADS2. Advertising markers may be inserted into the data stream as is known under, for example, standard 35, 37 or other standards set by the Society of Cable Telecommunications Engineers (SCTE) for example. Bits in the transport package are inserted to indicate the start and stop of advertisements, such as B1 and B2. Note that SCTE 35 relates to digital advertisements.

Each advertising fingerprint is stored in the fingerprint database 11. As described, the fingerprints are preferably created during content creation, although they may be created at other times. The fingerprint can be computed for audio content of the channel, video content or combinations of these, or any supporting data.

The advertisement is then inserted into the broadcast TV stream 10 into the place holders identified by add markers B1, B2 for example. Note that in addition to audio and video data, the TV delivery system will also include a control channel for carrying control demands such as data under the Internet Group Management Protocol (IGMP) or Real-Time Streaming Protocol (RTSP). The video may be in Moving Picture Expert Group 2 (MPEG2) video format or other formats.

The insertion into the TV program may be done at a local, regional or national level.

When the broadcast TV program is delivered to the end user, via the access network to his router 5 or other means, then a channel change tracking agent 15 in the network collects information about channels viewed by the user. This may include a fast channel change (FCC) agent which is known in itself and is a means by which the user can change the channels he views, or a conventional channel change agent using IGMP or Multicast Listener Discovery Protocol (MLD). The channel 1 change tracking agent 15 collects information about the channels viewed by the user and can transmit this information to the profiling server 12. Also, at the access network, the fingerprint agent 16, when detecting that an advertisement is present on the channel (by means of the markers as described above or otherwise) computes a fingerprint for that advertisement.

Then, information about the user identifier from database 14 (identifying the actual user), channel viewing data from channel change agent 15 and fingerprint data from the fingerprint agent 16 is passed to the profiling server 12. This also receives information from a user database 13 comprising user ID which can be correlated with user ID database 14, for example. The profiling server 12 resolves the advertising fingerprint data and sends this to the fingerprint database 11 where it is compared with pre-existing fingerprints. When the advertisement has been identified then details of the advertisement (and perhaps also metadata) is used to update the profiling server with advertising viewing data. This viewing data may include details of the advertisement actually watched by that user (or group of users or subscribers as appropriate).

Information can therefore be stored and/or transmitted onward to determine advertising viewing data. By using channel change information, the advertisements actually viewed by the user and the percentage of the advertisement used can be determine. For example, if a user started watching a thirty second advertisement but turned to a different channel after ten seconds of viewing, then information from the channel change application 15 can determine this.

Embodiments are suitable for both linear advertising content (ie advertisement inserted into a general stream for general viewing) and also targeted advertising where personalised advertisements are inserted in response to a particular user demand, user profile and so on. Embodiments can be used with targeted advertisement insertion performed in the network where targeted advertisement and the broadcast stream are mixed together into a single stream and advertising metadata is not available, from the content provider for example.

Furthermore, they do not require any modification or additional requirement at the user or client site (eg set-top box, etc) so computation is done higher up the network and most preferably in the access network. Thus, techniques may easily be migrated to existing deployment.

The methods do not rely on knowledge about advertising metadata in the network for advertising tracking.

In embodiments, advertisements which are to be inserted are initially fingerprinted. These may be advertisements to be inserted by different content providers or different advertising agencies (eg national, regional, local or other distinctions) into a broadcast TV stream. Advertising fingerprints are also collected within the network itself, as described. The content or advertisement provider can generate advertising fingerprint and provide them to the shared database 11. The advertisements can then be transmitted without encrypted or more preferably for the advertisers encryption, even on encrypted channels, thus increasing viewing of the advertisement itself.

Data that can be obtained includes, by way of example only and as non-limiting examples, start and stop times.

In the network, each advertisement is fingerprinted and this fingerprint and timing data is passed to an advertising tracking authority. The advertising tracking server 12 resolves the fingerprint into advertising identification which is then made available together perhaps with additional metadata and 'air time' data for matching with a user's channel change behaviour 15 or to tracking viewing.

In an alternative, advertisements may be tracked based upon fingerprints of an audio stream to reduce the load for computing advertising fingerprints. A yet further approach is for the network to obtain a short sample of the audio track of an advertisement and to pass this sample to an external fingerprint analyser which performs both fingerprinting of the sample and identification of the advertisement.

Other uses will be apparent.

Information, such as that a particular user watched a particular advertisement X number of times, may be obtained. Such information would be accurate in the event of drifting in advertisement time, which can happen, e.g. to match insertion of advertisements to natural pauses in live events.

Note that a dedicated client or any alteration to client equipment is not required. Therefore a cost efficient solution is provided. Content can also be tracked in the trusted network domain, rather than from untrusted end use equipment, which is opened to malicious attacks and can potentially supply fraudulent data.

Techniques for fingerprinting content are well-known. For example, many examples of fingerprinting content are available, eg MACS: Music Audio Characteristic Sequence Indexing for Similarity Retrieval (http://infolab.standard.edu/∼yangc/pub/cywaspaa01.pdf) identifies that 30 to 60 seconds segment of original music is sufficient for almost 100% accuracy of the content identification. Similarly, various researches are available on how to optimise fingerprint computation, eg http:llinfolab.standard.edu/∼yangc/pub/cy-mm02.pdf.

Another method of obtaining fingerprinting is to sample the content stream over a period of time, between markers identifying the advertising content for example and then applying a hash function to this. Methods of doing this will be well-known.

Either the whole advertisement or a smaller sample of it may be used to generate a hash or other fingerprint data which uniquely identifies the advertisement.

Note that the fingerprint of content viewed by the user might be determined or obtained at the access network, the core network or other network. It may be actually computed (determined) in the network or might be obtained in the network, i.e. data sufficient to compute the fingerprint is obtained in the network and is passed to a 'fingerprint determiner', such as the profiling server 12 for fingerprint computing.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) for furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of tracking advertisements provided over a network, comprising obtaining a fingerprint of an advertisement to be distributed over the network; obtaining a fingerprint of advertising content received by a user, and comparing the fingerprints to determine viewing of a particular advertisement by a particular user.

2. A method as claimed in Claim 1, wherein the fingerprint of the content viewed by the user is computed within the network.

3. A method as claimed in Claim 2, wherein the network is an access or core network.

4. A method as claimed in Claim 1, wherein data sufficient to compute the fingerprint or content received by a user is obtained in the network and is passed to a fingerprint determiner for the fingerprint to be computed.

5. A method as claimed in Claim 4, wherein the fingerprint determiner is a profiling server.

6. A method as claimed in any preceding claim, comprising storing fingerprint data relating to a plurality of advertisements in a database and comparing the fingerprint of content received by a user with fingerprints in the database to determine viewing of a particular advertisement by a particular user.

7. A method as claimed in any preceding claim, wherein each advertisement is transmitted as part of a stream of content provided to a user, the stream being provided with markers indicating the position of one or more advertisement within the stream.

8. A method as claimed in any preceding claim, including storage means for storing and/or modifying profiles of users and means for associating viewing of a particular advertisement with a particular user and using this to modify that user's profile.

9. A method as claimed in any preceding claim, including determining a channel transmitted to or viewed by a user at any time and correlating this with advertising data.

10. A method as claimed in any preceding claim, including computing a fingerprint of advertisements transmitted to a user when it is determined that an advert is present on a channel transmitted to a user.

11. Apparatus for tracking advertisements provided over a network, comprising a fingerprinting means for fingerprinting one or more advertisements to be distributed over the network; means for determining, at an access network, that a stream of content is delivered to a user; means for fingerprinting advertising content within that stream and means for comparing fingerprints to determine viewing of a particular advertisement by a particular user.

12. Apparatus as claimed in Claim 11, including a fingerprint database populated with fingerprints related to a plurality of advertisements.

13. Apparatus as claimed in any preceding claim, including means for determining a channel of content distributed to or viewed by a user at any time and for correlating data generated by that with advertising data.

14. Apparatus as claimed in any of Claims 11 to 13, including means for providing a stream of content with markers indicating where advertisements occur within the stream and means for fingerprinting content indicated by the markers.

15. A database comprising a plurality of fingerprints, each fingerprint being representative of a specific advertisement to be transmitted over the network.

## Amended claims

### Amended claims in accordance with Rule 137(2) EPC.

**1.** A method of tracking advertisements provided over a network, **characterised by** obtaining a fingerprint of an advertisement to be distributed over the network; obtaining a fingerprint of advertising content received by a user, and comparing the fingerprints to determine viewing of a particular advertisement by a particular user, wherein the network comprises storage means for storing and/or modifying profiles of users and means for associating viewing of a particular advertisement with a particular user and using this to modify that user's profile.

**2.** A method as claimed in Claim 1, wherein the fingerprint of the content viewed by the user is computed within the network.

**3.** A method as claimed in Claim 2, wherein the network is an access or core network.

**4.** A method as claimed in Claim 1, wherein data sufficient to compute the fingerprint or content received by a user is obtained in the network and is passed to a fingerprint determiner for the fingerprint to be computed.

**5.** A method as claimed in Claim 4, wherein the fingerprint determiner is a profiling server (12).

**6.** A method as claimed in any preceding claim, comprising storing fingerprint data relating to a plurality of advertisements in a database and comparing the fingerprint of content received by a user with fingerprints in the database to determine viewing of a particular advertisement by a particular user.

**7.** A method as claimed in any preceding claim, wherein each advertisement is transmitted as part of a stream of content provided to a user, the stream being provided with markers indicating the position of one or more advertisement within the stream.

**8.** A method as claimed in any preceding claim, including determining a channel transmitted to or viewed by a user at any time and correlating this with advertising data.

**9.** A method as claimed in any preceding claim, including computing a fingerprint of advertisements transmitted to a user when it is determined that an advert is present on a channel transmitted to a user.

**10.** Apparatus for tracking advertisements provided over a network, **characterised by** fingerprinting means for fingerprinting one or more advertisements to be distributed over the network; means for determining, at an access network, that a stream of content is delivered to a user; means for fingerprinting advertising content within that stream and means for comparing fingerprints to determine viewing of a particular advertisement by a particular user, wherein the network comprises storage means for storing and/or modifying profiles of users and means for associating viewing of a particular advertisement with a particular user and using this to modify that user's profile.

**11.** Apparatus as claimed in Claim 10, including a fingerprint database populated with fingerprints related to a plurality of advertisements.

**12.** Apparatus as claimed in Claim 10 or 11, including means for determining a channel of content distributed to or viewed by a user at any time and for correlating data generated by that with advertising data.

**13.** Apparatus as claimed in any of Claims 10 to 12, including means for providing a stream of content with markers indicating where advertisements occur within the stream and means for fingerprinting content indicated by the markers.
